(19) Europäisches Patentamt
European Patent Office
Office européen des brevets

(11) EP 4 400 529 A1

(12) **EUROPEAN PATENT APPLICATION**
published in accordance with Art. 153(4) EPC

(43) Date of publication:
**17.07.2024 Bulletin 2024/29**

(21) Application number: **22869138.2**

(22) Date of filing: **09.09.2022**

(51) International Patent Classification (IPC):
***C08G 63/672*** *(2006.01)* ***C08G 63/183*** *(2006.01)*
***C08G 63/85*** *(2006.01)* ***C08L 67/02*** *(2006.01)*

(52) Cooperative Patent Classification (CPC):
**C08G 63/183; C08G 63/672; C08G 63/85; C08J 5/18; C08L 67/02**

(86) International application number:
**PCT/CN2022/118114**

(87) International publication number:
**WO 2023/040769 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.09.2021 CN 202111076714**

(71) Applicants:
- **Zhuhai Wango Chemical Co., Ltd.**
  **Zhuhai, Guangdong 519000 (CN)**
- **KINGFA SCI. & TECH. CO., LTD.**
  **Guangzhou, Guangdong 510663 (CN)**

(72) Inventors:
- **ZHANG, Chuanhui**
  **Zhuhai, Guangdong 519000 (CN)**
- **CHEN, Pingxu**
  **Zhuhai, Guangdong 519000 (CN)**
- **YE, Nanbiao**
  **Zhuhai, Guangdong 519000 (CN)**
- **OUYANG, Chunping**
  **Zhuhai, Guangdong 519000 (CN)**
- **MAI, Kaijin**
  **Zhuhai, Guangdong 519000 (CN)**
- **DONG, Xueteng**
  **Zhuhai, Guangdong 519000 (CN)**
- **ZENG, Xiangbin**
  **Zhuhai, Guangdong 519000 (CN)**
- **LU, Changli**
  **Zhuhai, Guangdong 519000 (CN)**
- **CAI, Tongmin**
  **Zhuhai, Guangdong 519000 (CN)**

(74) Representative: **Petraz, Gilberto Luigi et al**
**GLP S.r.l.**
**Viale Europa Unita, 171**
**33100 Udine (IT)**

# (54) SEMI-AROMATIC POLYETHER ESTER, PREPARATION METHOD THEREFOR AND USE THEREOF

(57) The present invention relates to a semi-aromatic polyether ester, a preparation method therefor and use thereof. The semi-aromatic polyether ester includes repeating units derived from the following components: a first component A, based on the total molar amount of the first component A, including: a1) 35-65 mol%, and preferably 40-60 mol% of at least one aliphatic dicarboxylic acid or an ester derivative thereof, or an anhydride derivative thereof, and a2) 35-65 mol%, and preferably 40-60 mol% of at least one aromatic dicarboxylic acid or an ester derivative thereof, or an anhydride derivative thereof; a second component B: 1,4-butanediol; and a third component C: poly(1,4-butanediol) having a molecular formula of HO-$(CH_2CH_2CH_2CH_2\text{-}O)_n$-H, where n is an integer from 2 to 200; based on the total molar weight of the first component A, the molar content of the repeating unit -$CH_2CH_2CH_2CH_2$-O- in the third component C is 1.5-5.5 mol%.

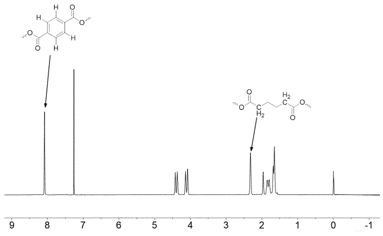

FIG. 1

EP 4 400 529 A1

## Description

### TECHNICAL FIELD

The present invention belongs to the technical field of biodegradable polyesters, specifically relates to a semi-aromatic polyether ester, a preparation method therefor and use thereof, and more specifically relates to a semi-aromatic polyether ester with a specific content of poly(1,4-butanediol), a preparation method therefor and use thereof.

### BACKGROUND

Currently, thermoplastic aromatic polyesters widely used in industry and daily life have good thermal stability and mechanical properties, and are easy to process and low in price. For example, polyethylene terephthalate (PET) and poly(1,4-butylene terephthalate) (PBT) have been extensively applied in the manufacture of fibers, films, and containers. However, these aromatic polyesters are hardly degraded after being discarded. Up to now, no microorganism has yet been observed to obviously degrade aromatic polyesters such as, PET and PBT. To balance the excellent performance of aromatic polyesters, those skilled in the art have been devoted to studying the synthesis of aliphatic-aromatic copolyesters since 1980s; that is, aromatic chain segments are introduced into aliphatic polyesters, which ensures that the copolyester not only has excellent performance of aromatic polyesters, but also possesses biodegradability.

Thermoplastic polyester elastomer (TPEE), also called polyester rubber, is a category of linear block copolymers containing a polyester PBT hard segment (a crystalline phase for providing strength) and a polyether soft segment (continuous segment). Rigidity, polarity and crystallinity of the hard segment cause the TPEE to have outstanding strength and better high-temperature resistance, creep resistance, solvent resistance, and impact resistance. Low glass transition temperature and saturability of the polyether soft segment cause it to have fine high-temperature resistance and ageing resistance. TPEE both possesses fine elasticity of rubber and workability of thermoplastics. Compared with other thermoplastic elastomers, TPEE is of distinct advantages in properties such as flexural modulus, flexible fatigue performance, temperature tolerance, gasolene resistance and solvent resistance. However, to achieve the above effects, the amount of the soft segment polyether added is generally up to 20-50 wt% above such that the melting point of polymer reduces and heat resistance declines. For example, CN106478930A has disclosed in Example 6 that poly(1,4-butanediol) having a repeating unit of poly(1,4-butanediol) being up to 67 mol% (based on 100 mol% molar content of the dicarboxylic acid) is added to the PBT polymerization system to obtain the thermoplastic PBT-ploy(1,4-butanediol) elastomer with good flexibility. However, such a TPEE obviously has no biodegradability due to lack of aliphatic diacids.

CN1170419A discloses an aliphatic-aromatic polyether ester composition; the molar content of the repeating unit polyethylene glycol added is up to 217-682 mol% (based on 100 mol% molar content of dicarboxylic acid). In addition, its polymerization product has a lower viscosity number, and the viscosity number of the non-chain extended product is only 60-110 ml/g, and even after experiencing the chain extension with hexamethylene diisocyanate, the product only has a viscosity number of 112 ml/g with poor performance. Moreover, the invention adopts a batchwise polymerization process (gram-scale) in a laboratory scale and thus, is hard to meet the demand for industrial production.

Self-adhesive outer packaging film can prevent evaporation of water in food during storage in a refrigerator, evaporation of water during the heating process in a microwave oven, diffusion of aroma or taste, or can prevent food from being contaminated by other odors or dust during storage. Therefore, the self-adhesive outer packaging film has been widely applied to homes, restaurants and hotels for food sealing. Major textures of the self-adhesive protective film include PP, PE, PET, PVC, and the like. Polyethylene self-adhesive film has good characteristics of softness, good toughness, large elongation, easy bending, and good adhesion, and thus, occupies higher market shares in protective films. The consumption of the global self-adhesive protective films is about millions of tons per year at present. However, the existing self-adhesive protective films including PE on the market are all nondegradable high polymer materials. Compared with ordinary plastics, due to thinner texture and unfixed shape, the plastic protective film is hardly reused and thus, hard to achieve recycling. High consumption and shortage of subsequent processing of the plastic protective film result in the waste of the protective film and increasingly serious pollution. The protective film has played a role of environmental killer.

CN112538321A discloses a degradable self-adhesive film material; its tackifying effect is achieved by adding a tackifying resin. The tackifying resin is selected from one, two, or more of a C5 petroleum resin, a C9 petroleum resin, a rosin resin, a terpene resin, and an alkyl phenolic resin. On one hand, these tackifying resins are nondegradable, thus boosting the environment stress, on the other hand, there is a possibility that these tackifying resins may be separated out when contacting food, thereby causing a food safety problem.

## SUMMARY

The object of the present invention is to overcome the shortcomings of the prior art and to provide a semi-aromatic polyether ester. With a specific content of poly(1,4-butanediol), the semi-aromatic polyether ester enables the film formed thereby to have good self-adhesive property and low overall migration of the polyether ester.

Another object of the present invention is to provide a preparation method of the above semi-aromatic polyether ester.

A further object of the present invention is to provide use of the above semi-aromatic polyether ester.

The aforesaid objects of the present invention are achieved by the following technical solutions:
In one aspect, the present invention provides a semi-aromatic polyether ester, including repeating units derived from the following components:

a first component A, based on a total molar weight of the first component A, including:

a1) 35-65 mol%, and preferably, 40-60 mol% of at least one aliphatic dicarboxylic acid or an ester derivative thereof or an anhydride derivative thereof,
a2) 35-65 mol%, and preferably, 40-60 mol% of at least one aromatic dicarboxylic acid or an ester derivative thereof or an anhydride derivative thereof,

a second component B: 1,4-butanediol; and
a third component C: poly(1,4-butanediol) having a molecular formula of HO-$(CH_2CH_2CH_2CH_2\text{-}O)_n$-H, wherein n is an integer from 2 to 200, and based on a total molar weight of the first component A, a molar content of a repeating unit $-CH_2CH_2CH_2CH_2$-O- in the third component C is 1.5-5.5 mol%.

In the present invention, based on the total molar weight of the first component A, the molar content of the repeating unit $-CH_2CH_2CH_2CH_2$-O- in the third component C is controlled to 1.5-5.5 mol% such that the film formed possesses good self-adhesive property and low overall migration of the polyether ester.

The self-adhesive property in the present invention refers that the film is sticky by itself at room temperature, and meanwhile can adhere to glass, ceramic, metal and other materials such that the film is used in the fresh-keeping packaging of food such as vegetables, fruits, fish, meat, and bread during the process of refrigeration and cold storage. The self-adhesive property can be generally represented by shear and peel strength with reference to GB 10457-2009 Plastic Cling Wrap film for Keeping Fresh of Food 7.8 Self-Cling (Shear and Peel Strength).

In the present invention, the component a1) is selected from one or more of oxalic acid, dimethyl oxalate, malonic acid, dimethyl malonate, succinic acid, dimethyl succinate, methylsuccinic acid, glutaric acid, dimethyl glutarate, bis(2-hydroxyethyl) glutarate, bis(3-hydroxypropyl)glutarate, bis(4-hydroxybutyl) glutarate, 2-methylglutaric acid, 3-methylglutaric acid, adipic acid, dimethyl adipate, bis(2-hydroxyethyl) adipate, bis(3-hydroxypropyl) adipate, bis(4-hydroxybutyl) adipate, 3-methyladipic acid, 2,2,5,5-tetramethyladipic acid, pimelic acid, suberic acid, azelaic acid, dimethyl azelate, decanedioic acid, 1,11-undecanedicarboxylic acid, 1,10-decanedicarboxylic acid, undecandioic acid, 1,12-dodecanedicarboxylic acid, hexadecanedioic acid, eicosandioic acid, tetracosandioic acid, dimer acid, and an ester derivative thereof, and an anhydride derivative thereof; preferably, selected from one or more of succinic acid, adipic acid, decanedioic acid, 1,12-dodecanedicarboxylic acid, and an ester derivative thereof and an anhydride derivative thereof; more preferably, selected from one or two of adipic acid, decanedioic acid, and an ester derivative thereof and an anhydride derivative thereof; and most preferably, being adipic acid, or an ester derivative thereof or an anhydride derivative thereof.

Meanwhile, the ester derivatives formed by the above aliphatic dicarboxylic acids also fall within the category of the component a1); preferably, the ester derivative of the aliphatic dicarboxylic acid is selected from dialkyl esters formed by aliphatic dicarboxylic acids, for example, dimethyl esters, diethyl esters, di-n-propyl esters, diisopropyl esters, di-n-butyl esters, diisobutyl esters, di-tert butyl esters, di-n-pentyl esters, di-iso-amyl esters, and di-n-hexyl esters.

Meanwhile, the anhydride derivatives formed by the above aliphatic dicarboxylic acids also fall within the category of the component a1). Preferably, the anhydride derivative formed by the above aliphatic dicarboxylic acids is selected from adipic anhydrides and sebacic anhydrides.

The aliphatic dicarboxylic acid or the ester derivative thereof or the anhydride derivative thereof in the present invention may be used alone or used in a form of a mixture of two or more thereof.

In the present invention, the component a2) is selected from one or more of terephthalic acid, dimethyl terephthalate, bis(2-hydroxyethyl) terephthalate, bis(3-hydroxypropyl) terephthalate, bis(4-hydroxybutyl) terephthalate, isophthalic acid, dimethyl isophthalate, bis(2-hydroxyethyl) isophthalate, bis(3-hydroxypropyl) isophthalate, bis(4-hydroxybutyl) isophthalate, 2,6-naphthalenedicarboxylic acid, dimethyl 2,6-benzenedicarboxylate, 2,7-naphthalenedicarboxylic acid, dimethyl 2,7-benzenedicarboxylate, 3,4'-diphenyl ether dicarboxylic acid, dimethyl 3,4'-diphenyl ether dicarboxylate, 4,4'-diphenyl ether dicarboxylic acid, dimethyl 4,4'-diphenyl ether dicarboxylate, 3,4'-phenylthioether dicarboxylic acid, dimethyl 3,4'-phenylthioether dicarboxylate, 4,4'-phenylthioether dicarboxylic acid, dimethyl 4,4'-phenylthioether dicarboxylate, 3,4'-diphenylsulfone dicarboxylic acid, dimethyl 3,4'-diphenylsulfone dicarboxylate, 4,4'-diphenylsulfone dicarboxylic acid, dimethyl 4,4'-diphenylsulfone dicarboxylate, 3,4'-benzophenone dicarboxylic acid, dimethyl 3,4'-benzophenone dicarboxylate, 4,4'-benzophenone dicarboxylic acid, dimethyl 4,4'-benzophenone dicarboxylate, 1,4-naphthalenedicarboxylic acid, dimethyl 1,4-naphthalene dicarboxylate, 4,4'-methylenebis(benzoic acid), 4,4'-methylenebis(dimethyl benzoate), and an ester derivative thereof and an anhydride derivative thereof; and preferably, being terephthalic acid, or an ester derivative thereof or an anhydride derivative thereof.

In the present invention, the poly(1,4-butanediol) in the third component C has a molecular formula of $HO-(CH_2CH_2CH_2CH_2-O)_n-H$, where n is preferably an integer from 2 to 50, more preferably, from 2 to 30. Moreover, based on the total molar weight of the first component A, the molar content of the repeating unit $-CH_2CH_2CH_2CH_2-O-$ in the third component C is preferably 2.0-5.0 mol%.

In an illustrative embodiment, the semi-aromatic polyether ester further includes a fourth component D including at least three functional groups, and preferably three to six functional groups. The fourth component D is preferably selected from one or more of tartaric acid, citric acid, malic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, and pyromellitic dianhydride; and more preferably, being trimethylolpropane, pentaerythritol, or glycerol.

Preferably, based on the total molar weight of the first component A, the fourth component D has a molar content of 0.01-5.0 mol%, and further preferably 0.02-2.0 mol%.

In an illustrative embodiment, the semi-aromatic polyether ester further includes a fifth component E as a chain extender. The chain extender is preferably one or a mixture of more of an isocyanate, an isocyanurate, a peroxide, an epoxide, oxazoline, oxazine, lactam, carbodiimide and polycarbodiimide that contain two or more functional groups.

The isocyanate containing two or more functional groups may be an aromatic isocyanate or an aliphatic isocyanate, and preferably, aromatic diisocyanate or aliphatic diisocyanate. Preferably, the aromatic diisocyanate is toluene 2,4-diisocyanate, toluene 2,6-diisocyanate, diphenylmethane 2,2'-diisocyanate, diphenylmethane 2,4'-diisocyanate, diphenylmethane 4,4'-diisocyanate, naphthalene 1,5-diisocyanate, or xylene diisocyanate.

More preferably, the aromatic diisocyanate is diphenylmethane 2,2'-diisocyanate, diphenylmethane 2,4'-diisocyanate, or diphenylmethane 4,4'-diisocyanate.

Preferably, the aliphatic diisocyanate is any linear or branched alkylene diisocyanate or cycloalkylene diisocyanate including 2-20 carbon atoms. More preferably, the aliphatic diisocyanate is any linear or branched alkylene diisocyanate or cycloalkylene diisocyanate including 3-12 carbon atoms. The aliphatic diisocyanate may be hexamethylene 1,6-diisocyanate, isophorone diisocyanate, or methylenebis(4-isocyanatocyclohexane). Most preferably, the aliphatic diisocyanate is hexamethylene 1,6-diisocyanate, and isophorone diisocyanate.

The isocyanate including two or more functional groups may be further tri-(4-isocyanatophenyl)methane with three rings.

Preferably, the isocyanurate including two or more functional groups may be an aliphatic isocyanurate derived from alkylene diisocyanates and cycloalkylene diisocyanates having 2-20 carbon atoms, and preferably, 3-12 carbon atoms, e.g., isophorone diisocyanate or methylenebis(4-isocyanatocyclohexane). The alkylene diisocyanates may be linear or branched compounds, particularly, preferably cyclic tripolymer, pentamer, or higher oligomer isocyanurates based on n-hexamethylene diisocyanates, e.g., hexamethylene 1,6-diisocyanate.

Preferably, the peroxide including two or more functional groups is selected from a benzoyl peroxide, 1,1-di(tert-butylperoxo)-3,3,5-trimethylcyclohexane, 1,1-di(tert-butylperoxo)methylcyclododecane, 4,4-di(butylperoxo)n-butyl valerate, dicumyl peroxide, tert-butyl peroxybenzoate, dibutyl peroxide, $\alpha,\alpha$-di(tert-butylperoxo)diisopropylbenzene, 2,5-dimethyl-2,5-di(tert-butylperoxo)hexane, 2,5-dimethyl-2,5-di(tert-butylperoxo)hexyl-3-yne, and tert-butylcumyl peroxide.

Preferably, the epoxide including two or more functional groups is selected from hydroquinone, diglycidyl ether, resorcinol diglycidyl ether, 1,6-hexanediol diglycidyl ether, hydrogenated bisphenol A diglycidyl ether, diglycidyl terephthalate, diglycidyl tetrahydrophthalate, diglycidyl hexahydrophthalate, dimethyl diglycidyl phthalate, phenylene diglycidyl ether, ethylidene diglycidyl ether, trimethylene diglycidyl ether, tetramethylene diglycidyl ether, hexamethylene diglycidyl ether, sorbitol diglycidyl ether, polyglycerol polyglycidyl ether, pentaerythritol polyglycidyl ether, diglycerol polyglycidyl ether, glycerol polyglycidyl ether, trimethylolpropane polyglycidyl ether, resorcinol diglycidyl ether, neopentyl glycol diglycidyl ether, ethanediol diglycidyl ether, diglycol diglycidyl ether, polyethylene glycol diglycidyl ether, propylene glycol diglycidyl ether, dipropylene glycol diglycidyl ether, polypropylene glycol diglycidyl ether, and poly(1,4-butanediol) diglycidyl ether.

The epoxide including two or more functional groups is further preferably a copolymer based on styrene, acrylate, and/or methacrylate and containing an epoxy group; the epoxy group is preferably glycidyl methacrylate (GMA). It has been proved that the beneficial compound is a copolymer having a GMA ratio of higher than 20 wt%, preferably higher than 30 wt%, and more preferably higher than 50 wt%. The epoxide equivalent weight in these copolymers is

preferably 150-3000 g/equivalent, and more preferably 200-500 g/equivalent. The weight-average molecular weight (Mw) of the copolymer is preferably 2,000-25,000, and more preferably 3,000-8,000. The number-average molecular weight (Mn) of the copolymer is preferably 400-6,000, and more preferably 1,000-4,000. Polydispersity index (Q=Mw/Mn) is preferably 1.5-5.

The oxazoline/oxazine including two or more functional groups is preferably dioxazoline or dioxazine, its bridging portion is a single bond, $(CH_2)$z-alkylene, where z=2, 3 or 4, e.g., methylene, ethyl-1,2-diyl, propyl-1,3-diyl, propyl-1,2-diyl, or phenylene. Specifically, the dioxazoline is selected from 2,2'-di(2-oxazoline), di(2-oxazolinyl)methane, 1,2-di(2-oxazolinyl)ethane, 1,3-di(2-oxazolinyl)propane, 1,4-di(2-oxazolinyl)butane, 2,2'-di(2-oxazoline), 2,2'-di(4-methyl-2-oxazoline), 2,2'-di(4,4'-dimethyl-2-oxazoline), 2,2'-di(4-ethyl-2-oxazoline), 2,2'-di(4,4'-diethyl-2-oxazoline), 2,2'-di(4-propyl-2-oxazoline), 2,2'-di(4-butyl-2-oxazoline), 2,2'-di(4-hexyl-2-oxazoline), 2,2'-di(4-phenyl-2-oxazoline), 2,2'-di(4-cyclohexyl-2-oxazoline), 2,2'-di(4-phenylmethyl-2-oxazoline), 2,2'-p-phenylenedi(4-methyl-2-oxazoline), 2,2'-p-phenylenedi(4,4'-dimethyl-2-oxazoline), 2,2'-m-phenylenedi(4-methyl-2-oxazoline), 2,2'-m-phenylenedi(4,4'-dimethyl-2-oxazoline), 2,2'-hexamethylenedi(2-oxazoline), 2,2'-octamethylenedi(2-oxazoline), 2,2'-decamethylenedi(2-oxazoline), 2,2'-ethylidenedi(4-methyl-2-oxazoline), 2,2'-tetramethylenedi(4,4'-dimethyl-2-oxazoline), 2,2'-9,9'-diphenoxyethanedi(2-oxazoline), 2,2'-cyclohexylenedi(2-oxazoline), and 2,2'-diphenylene(2-oxazoline).

Specifically, dioxazine is 2,2'-di(2-dioxazine), di(2-dioxazinyl)methane, 1,2-di(2-dioxazinyl)ethane, 1,3-di(2-dioxazinyl)propane, 1,4-di(2-dioxazinyl)butane, 1,4-di(2-dioxazinyl)benzene, 1,2-di(2-dioxazinyl)benzene, or 1,3-di(2-dioxazinyl)benzene;

more preferably, being 1,4-di(2-oxazolinyl)benzene, 1,2-di(2-oxazolinyl)benzene, or 1,3-di(2-oxazolinyl)benzene.

The carbodiimide or polycarbodiimide including two or more functional groups is preferably N,N'-di-2,6-diisopropylphenyl carbodiimide, N,N'-di-o-tolyl carbodiimide, N,N'-diphenyl carbodiimide, N,N'-dioctyldecyl carbodiimide, N,N'-di-2,6-dimethylphenyl carbodiimide, N-tolyl-N'-cyclohexyl carbodiimide, N,N'-di-2,6-di-tert-butylphenyl carbodiimide, N-tolyl-N'-phenyl carbodiimide, N,N'-di-p-nitrophenyl carbodiimide, N,N'-di-p-aminophenyl carbodiimide, N,N'-di-p-hydroxyphenyl carbodiimide, N,N'-dicyclohexyl carbodiimide, N,N'-di-p-tolyl carbodiimide, p-phenylenebis-di-o-tolyl carbodiimide, p-phenylenebis-dicyclohexyl carbodiimide, hexamethylenebis-dicyclohexyl carbodiimide, 4,4'-dicyclohexylmethane carbodiimide, ethylidenebisdiphenyl carbodiimide, N,N'-phenylmethyl-carbodiimide, N-octadecyl-N'-phenyl carbodiimide, N-benzyl-N'-phenyl carbodiimide, N-octadecyl-N"-tolyl carbodiimide, N-cyclohexyl-N'-tolyl carbodiimide, N-phenyl-N'-tolyl carbodiimide, N-benzyl-N'-tolyl carbodiimide, N,N'-di-o-ethylphenyl carbodiimide, N,N'-di-p-ethylphenyl carbodiimide, N,N'-di-o-isopropylphenyl carbodiimide, N,N'-di-p-isopropylphenyl carbodiimide, N,N'-di-o-isobutylphenyl carbodiimide, N,N'-di-p-isobutylphenyl carbodiimide, N,N'-di-2,6-diethylphenyl carbodiimide, N,N'-di-2-ethyl-6-isopropylphenyl carbodiimide, N,N'-di-2-isobutyl-6-isopropylphenyl carbodiimide, N,N'-di-2,4,6-trimethylphenyl carbodiimide, N,N'-di-2,4,6-triisopropylphenyl carbodiimide, N,N'-di-2,4,6-triisobutylphenyl carbodiimide, diisopropyl carbodiimide, dimethyl carbodiimide, diisobutyl carbodiimide, dioctyl carbodiimide, tert-butylisopropyl carbodiimide, di-β-naphthyl carbodiimide, or di-tert-butyl carbodiimide.

Preferably, the content of the fifth component E is 0.01-5.0 mol% of the total molar weight of the first component A.

Preferably, the semi-aromatic polyether ester has a viscosity number of 100-350 ml/g as determined in a phenol/o-dichlorobenzene solution having a weight ratio of 1:1 in a 25±0.05°C thermostatic water bath in accordance with the provision of GB/T 17931-1999.

Preferably, the semi-aromatic polyether ester has a carboxyl group content of 5-60 mmol/kg, and further preferably, 10-50 mmol/kg.

In another aspect, the present invention further provides a method for preparing the above semi-aromatic polyether ester, including the following steps:

step S1: mixing the first component A, the second component B, the third component C, and a portion of a catalyst (the fourth component D being also added if necessary), and then heating up to 150-280°C for esterification reaction for 1-2 h in an esterification reactor to obtain an esterification product AB;

step S2: performing primary polycondensation on the esterification product AB obtained in the step S1 under the action of the remaining catalyst at a reaction temperature of 230-270°C until a reaction product reaches a viscosity number of 20-60 ml/g as determined in a phenol/o-dichlorobenzene solution having a weight ratio of 1:1 in a 25±0.05°C thermostatic water bath in accordance with GB/T 17931-1999;

step S3: transferring a product obtained from the primary polycondensation in the step S2 into a final polycondensation kettle for continuous polycondensation at a temperature of 220-270°C until a reaction product reaches a viscosity number of 100-250 ml/g as determined in a phenol/o-dichlorobenzene solution having a weight ratio of 1:1 in a 25±0.05°C thermostatic water bath according to GB/T 17931-1999; and the reaction product has a carboxyl group content of 5-60 mmol/kg, to obtain the semi-aromatic polyether ester.

Preferably, in the step S1, the molar content of the second component B is generally 1.1-3.0 times that of the first component A.

Preferably, in the step S1, during the preparation of the esterification product AB, the catalyst is added in an amount of 0.001-1%, and further preferably, 0.02-0.2% of a final weight of the semi-aromatic polyether ester. The amount of the catalyst added is controlled to make the subsequent processing more stable. In the step S1, the catalyst is added in an amount of 50-80 wt% of a total weight of the catalyst.

Further preferably, the catalyst may be a tin compound, an antimony compound, a cobalt compound, a lead compound, a zinc compound, an aluminium compound or a titanium compound, more preferably, a zinc compound, an aluminium compound or a titanium compound, and most preferably, a titanium compound. The titanium compound, e.g., tetrabutyl orthotitanate or tetraisopropyl orthotitanate, has the advantage of low toxicity of the residue in the product or down-stream product over other compounds. This property is especially important in biodegradable polyesters because it will directly enter the environment in a form of a compost bag or cover film.

In the step S2, the remaining catalyst may be added if necessary. In the step S2, the reaction temperature is more preferably 240-260°C.

In the step S2, the pressure is generally set as 0.1-0.5 bar, and preferably, 0.2-0.4 bar at the beginning; and the pressure is generally set as 5-200 mbar, and more preferably, 10-100 mbar at the end of the step S2.

In the step S2, the reaction time is generally 1-5 h; usually, after such a period of time, the reaction system may generate the prepolyether ester having a viscosity number of 20-60 ml/g as determined in a phenol/o-dichlorobenzene solution having a weight ratio of 1:1 in a 25±0.05°C thermostatic water bath according to GB/T 17931-1999. The carboxyl group content in the prepolyether ester after the reaction in the S2 is generally 10-60 mmol/kg.

In the continuous polycondensation reaction of the step S3, a passivator may be added to the reaction system if necessary. The available passivator is usually a phosphorus compound including phosphoric acid, phosphorous acid, and esters thereof. A passivator is usually added in the step S3 when a high-active titanium catalyst is used in the system.

In the step S3, the reaction temperature of the continuous polycondensation is preferably 230-270°C. In the step S3, the pressure is usually controlled within 0.2-5 mbar, and more preferably, 0.5-3 mbar at the beginning. The reaction time of the continuous polycondensation is preferably 30-120 min, and more preferably 50-100 min. The carboxyl group content in the semi-aromatic polyether ester after the reaction in the S3 is preferably 10-50 mmol/kg.

At the end of the step S3, if necessary, the semi-aromatic polyether ester obtained in the step S3 is added to a twin-screw extruder together with the chain extender in an amount of 0.01-5.0 mol% (based on the total molar weight of the first component A) for retention for 0.5-15 min at a reaction temperature of 200-270°C to obtain a semi-aromatic polyether ester; the semi-aromatic polyether ester has a viscosity number of 150-350 ml/g as determined in a phenol/o-dichlorobenzene solution having a weight ratio of 1:1 in a 25±0.05°C thermostatic water bath according to GB/T 17931-1999.

In a further aspect, the present invention further provides use of the above semi-aromatic polyether ester in preparing a compost-degradable product; the compost-degradable product is a fiber, a film, or a container, etc.

The present invention further provides use of the above semi-aromatic polyether ester in preparing a food wrap. The semi-aromatic polyester may be used as the material for making a food wrap after being blended and modified with polylactic acid (PLA), etc. The food wrap is required to have certain hydrolysis resistance as it contacts liquid. Moreover, considering the degradable requirement, the hydrolysis resistance should be not too strong, or otherwise the degradation cycle is too long. Based on the practical use, the degradation property is evaluated by testing the 30-day weight retention rate. The 30-day weight retention rate is within a range of 50-60% better, and the higher the retention rate is, the better the degradation property is within such a range. The degradation property is poor when the 30-day weight retention rate exceeds 65%; the degradation is too fast when the 30-day weight retention rate is lower than 45%. The above semi-aromatic polyether ester has suitable degradation property when applied to the preparation of food wraps. Moreover, the overall migration of the polyether ester is low and meets the requirement, i.e., the overall migration should be not greater than 10 $mg/dm^2$ as defined in GB4806.7-2016 China's National Food Safety Standard on Plastic Materials and Articles for Food Contact Use. Furthermore, the above semi-aromatic polyether ester meets the requirement, i.e., the shear and peel strength of the plastic cling wrap film for keeping fresh of food is not less than $0.5N/cm^2$ as defined in GB10457-2009. In a still further aspect, the present invention further provides a semi-aromatic polyether ester molding composition, including the following components in weight percentage:

5-95 wt% of the above semi-aromatic polyether ester;
5-95 wt% of an additive and/or other polymers; and
0-70 wt% of a reinforcing material and/or a filler.

As a detailed embodiment, the additive and/or other polymers may be, at least one or more components selected from aliphatic polyesters, polycaprolactones, starch, cellulose, polyhydroxyalkanoates, and polylactic acids.

Compared with the prior art, the present invention has the following beneficial effects:
The present invention provides a semi-aromatic polyether ester, a preparation method therefor and use thereof. Based on the total molar weight of the first component A, the molar content of the repeating unit $-CH_2CH_2CH_2CH_2-O-$ in the

third component C poly(1,4-butanediol) is controlled to 1.5-5.5 mol% such that the film formed possesses good self-adhesive property and low overall migration of the polyether ester.

## BRIEF DESCRIPTION OF DRAWINGS

FIG. 1 shows a $^1$H NMR spectrum of a semi-aromatic polyether ester after being dissolved into 0.6 ml of deuterated chloroform and determined by an AV 500 nuclear magnetic resonance spectrometer from Bruker;
FIG. 2 shows an HNMR spectrum and affiliation of each key peak of the semi-aromatic polyether ester obtained in Example 5; and
FIG. 3 shows a typical HNMR spectrum and affiliation of each key peak of the semi-aromatic polyether ester obtained in Example 2.

## DETAILED DESCRIPTION OF EMBODIMENTS

Raw materials, reagents and solvents used in the present invention, are commercially available without any treatment, unless otherwise specified. The present invention will be further described specifically in combination with examples; however, the embodiments of the present invention are not limited to the following examples. Moreover, any other changes, modifications, replacements, combinations and simplifications without departing from the spirit and principle of the present invention shall be equivalent replacements and thus, shall fall within the scope of protection of the present invention.
In addition, "part(s)" and "%" in the description, unless otherwise specified, denote "part(s) by mass" and "mass%", respectively.
Poly(1,4-butanediol) in the examples and comparative examples are all purchased from Badische Anilin Soda Fabrik Ga (BASF). 1,4-butanediol, terephthalic acid, adipic acid, decanedioic acid, glycerol, tetrabutyl orthotitanate, phosphorous acid, and other raw materials are all commercially available.

Test method:

Test for determining the content of poly(1,4-butanediol) in the semi-aromatic polyether ester (poly(butylene adipate-co-terephthalate) (PBAT) obtained by the reaction of terephthalic acid, adipic acid and 1,4-butanediol is set as an example):
20 mg of the semi-aromatic polyether ester sample were taken and dissolved into 0.6 ml of deuterated chloroform, and then $^1$H NMR was measured by an AV 500 nuclear magnetic resonance spectrometer from Bruker at room temperature, and the chloroform solvent peak (7.26 ppm) was calibrated.
As can be seen from the reference: Chen, X; Chen, W.; Zhu, G.; Huang, F.; Zhang, J., Synthesis, 1H-NMR characterization, and biodegradation behavior of aliphatic-aromatic random copolyester. J. Appl. Polym. Sci. 2007, 104(4): 2643-2649, 4 hydrogen atoms on the benzene ring of the repeating unit of terephthalic acid appeared nearby 8.10 ppm; 4 hydrogen atoms in the two $CH_2$ units adjacent to the carbonyl in the repeating unit of adipic acid appeared nearby 2.33 ppm. The results are shown in FIG. 1. As such, the molar content of the two acid components may be denoted by the integral areas ($I_T$ and $I_A$) of the two peaks at 8.10 ppm and 2.33 ppm.
The molar content of terephthalic acid in PBAT is equal to $I_T/(I_T+I_A)\times 100\%$
The molar content of adipic acid in PBAT is equal to $I_A/(I_T+I_A)\times 100\%$
The poly(1,4-butanediol) and HO-$(CH_2CH_2CH_2CH_2$-$O)_n$-H show different results on the HNMR spectrum when n is different, specifically discussed as follows:
① When the system only contains dimer(1,4-butanediol), i.e., n=2
As can be seen from the reference: Miles, W. H.; Ruddy, D. A.; Tinorgah, S.; Geisler, R. L., Acylative Dimerization of Tetrahydrofuran Catalyzed by Rare-Earth Triflates. Synth. Commun. 2004, 34(10): 1871-1880, the $^1$H NMR chemical shifts (labeled on the corresponding carbon atoms of the structural formula, unit: ppm) of the product generated by dimer(1,4-butanediol), benzoic acid, and acetic acid are shown in the following figure:

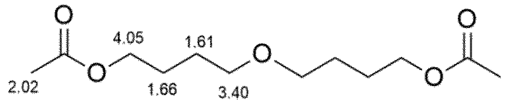
1a

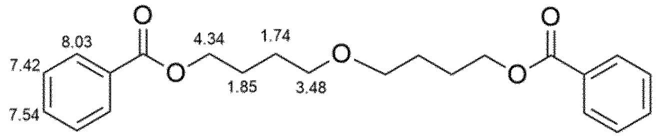

1d

with reference to the $^1H$ NMR chemical shifts of the above substances 1a and 1d, in the copolymerization product of dimer(1,4-butanediol), adipic acid (similar to 1a), and terephthalic acid (similar to 1d), the hydrogen atoms in the $CH_2$ unit linked to oxygen atom of the ether bond appeared nearby 3.40 ppm and 3.48 ppm. When dimer(1,4-butanediol) served as a comonomer, the HNMR spectrum and affiliation of each key peak of the semi-aromatic polyester obtained in Example 5 are shown in FIG. 2:
It can be thus calculated by FIG. 2 that based on the total molar weight of the first component A (diacid), the molar content Xc of the repeating unit $-CH_2CH_2CH_2CH_2-O-$ in the third component C is as follows:

$$X_C = \frac{\frac{I_1 + I_{1'} + I_2 + I_{2'}}{2}}{\frac{I_T + I_A}{4}} = 2\frac{I_1 + I_{1'} + I_2 + I_{2'}}{I_T + I_A} \qquad (1)$$

where,

$I_1$ and $I_{1'}$ are integral areas of the peaks of the hydrogen atoms in $-CH_2-$ linked to the oxygen atom of the ether bond on the dimer(1,4-butanediol) repeating unit adjacent to terephthalic acid;
$I_2$ and $I_{2'}$ are integral areas of the peaks of the hydrogen atoms in $-CH_2-$ unit linked to the oxygen atom of the ether bond in the dimer(1,4-butanediol) repeating unit adjacent to adipic acid;
$I_T$ is an integral area of the 4 hydrogen atoms on the benzene ring of the repeating unit of terephthalic acid;
IA is an integral area of the 4 hydrogen atoms on the two $-CH_2-$ linked to carbonyl of the repeating unit of adipic acid;

② When the system contains poly(1,4-butanediol), i.e., $n \geq 3$
As can be seen from the reference: Park, Y. H.; Cho, C. G., Synthesis and characterization of poly[(butylene succinate)-co-(butylene terephthalate)J-b-poly(tetramethylene glycol) segmented block copolymer. J. Appl. Polym. Sci. 2001, 79(11): 2067-2075., when the number of the repeating units $-CH_2CH_2CH_2CH_2-O-$ in poly(1,4-butanediol) is greater than or equal to 3, the 4 hydrogen atoms in the two $CH_2$ units linked to oxygen atom appeared nearby 3.4 ppm, being a single peak. When poly(1,4-butanediol) (n is bout 28) having a molecular weight of 2,000 was used, the typical HNMR spectrum and affiliation of each key peak of the semi-aromatic polyether ester obtained in Example 2 are shown in FIG. 3:
Based on the total molar weight of the first component A (diacid), the molar content *Xc* of the repeating unit $-CH_2CH_2CH_2CH_2-O-$ in the third component C poly(1,4-butanediol) is calculated by the following formula:

$$X_C = \frac{\frac{I_1 + I_{1'} + I_2 + I_{2'}}{2} + \frac{I_3}{4}}{\frac{I_T + I_A}{4}} = \frac{2(I_1 + I_{1'} + I_2 + I_{2'}) + I_3}{I_T + I_A} \qquad (2)$$

where,

$I_1$ and $I_1$ are integral areas of the peaks of the hydrogen atoms in $-CH_2-$ linked to the oxygen atom of the ether bond in the repeating unit of poly(1,4-butanediol) adjacent to terephthalic acid;
$I_2$ and $I_{2'}$ are integral areas of the peaks of the hydrogen atoms in $-CH_2-$ linked to the oxygen atom of the ether bond in the repeating unit of poly(1,4-butanediol) adjacent to adipic acid;
$I_3$ denotes an integral area of the peaks of the hydrogen atoms in $-CH_2-$ linked to the oxygen atom of the ether bond in the repeating unit of poly(1,4-butanediol) not adjacent to terephthalic acid and adipic acid;
$I_T$ is an integral area of the 4 hydrogen atoms on the benzene ring of the repeating unit of terephthalic acid;
$I_A$ is an integral area of the 4 hydrogen atoms on the two $-CH_2-$ linked to carbonyl in the repeating unit of adipic acid;

However, the three peaks of hydrogen atoms 2, 2', and 3 overlapped. Therefore, the areas of the peaks 2, 2', and 3 in the overlapped peak must be calculated separately, and then Xc is calculated by the formula (2).

Given that $I_1$ and $I_{1'}$ may also reflect the ratio of the repeating unit of terephthalic acid; $I_2$ and $I_{2'}$ may also reflect the ratio of the repeating unit of adipic acid, we obtain the following correlation:

$$\frac{\frac{I_T}{4}}{\frac{I_A}{4}} = \frac{\frac{I_1 + I_{1'}}{2}}{\frac{I_2 + I_{2'}}{2}} \quad (3)$$

The formula (3) is simplified to obtain the following:

$$I_2 + I_{2'} = \frac{I_A}{I_T}(I_1 + I_{1'}) \quad (4)$$

Additionally,

$$I_3 = I_{2\&2'\&3} - (I_2 + I_{2'}) = I_{2\&2'\&3} - \frac{I_A}{I_T}(I_1 + I_{1'}) \quad (5)$$

The formulas (4) and (5) are put into the formula (2) to obtain the following:

$$X_C = \frac{2(\frac{I_A}{I_T}+1)(I_1 + I_{1'}) + I_{2\&2'\&3} - \frac{I_A}{I_T}(I_1 + I_{1'})}{I_T + I_A} \times 100\% = \frac{(\frac{I_A}{I_T}+2)(I_1 + I_{1'}) + I_{2\&2'\&3}}{I_T + I_A} \times 100\% \quad (6)$$

The formula (6) is, namely, based on the total molar weight of the first component A (diacid), when n ≥ 3, the molar content *Xc* of the repeating unit $-CH_2CH_2CH_2CH_2-O-$ in the third component C, poly(1,4-butanediol) $HO-(CH_2CH_2CH_2CH_2-O)_n-H$ is calculated by the following formula:

Viscosity number of the semi-aromatic polyether ester:

The viscosity number was determined in a phenol/o-dichlorobenzene solution having a weight ratio of 1:1 in a 25±0.05°C thermostatic water bath in accordance with the provision of GB/T 17931-1999; the sample has a concentration of 5 mg/ml.

Carboxyl group content:

Acid value AN (mg KOH/g) was first determined according to the DIN EN 12634 in October 1998, and then the carboxyl group content (mmol/kg)=(AN/56)×$10^3$. The solvent mixture used includes 1 part by volume of DMSO, 8 parts by volume of isopropanol, and 7 parts by volume of toluene, in a volume of 100 ml. 3-6 g of semi-aromatic polyether ester were taken and heated up to 70°C such that all the polymers were totally dissolved to a clean solution. During the titration process, the solution temperature was kept 60-70°C to avoid the precipitation of the polymer. The titrating solution is selected from tetrabutylammonium hydroxide instead of highly-toxic tetramethylammonium hydroxide. Meanwhile, to prevent the mixed solvent from absorbing the $CO_2$ in the air to affect the volume of the titrating solution consumed by the blank solvent, when the volume of the titrating solution consumed by the blank solvent is about to be determined, the blank solvent should be heated up to 70°C and then kept for 0.5 h before the blank solvent is titrated.

30-day weight retention rate:

The biodegradation test of the semi-aromatic polyether ester is performed by reference to the test of GB/T 19277-2003. The semi-aromatic polyether ester test sample was first pressed to a film having a thickness of 0.10 mm, and then cut into a 1.2 cm×2.0 cm sample sheet; the sample weight was denoted as $a_0$ at this time. The sample sheets were then embedded into composting soil and put into an incubator; the composting soil was the city compost after being aerated for 56-70 d and sieved; the experimental temperature was kept at (58±2)°C, 30 d later, the composted sample sheets were taken out, washed, dried and weighed; the sample weight was denoted as $a_1$ at this time. The 30-day weight retention rate= $a_1/a_0 \times 100\%$. The higher the 30-day weight retention rate is, the more difficult the material degradation is; and the lower the 30-day weight retention rate is, the faster the material degradation rate is. Based on the practical use, the degradation property is evaluated by testing the 30-day weight retention rate. The 30-day weight retention rate is within a range of 50-60% better, and the higher the retention rate is, the better the degradation property is within such a range. When the 30-day weight retention rate is greater than 65%, the degradation property is too poor, when it is lower than 45%, degradation is too fast.

Preparation of a film blowing sample:

The raw material semi-aromatic polyether ester was dried for 4 h at 85°C, and put in a film blowing machine for film blowing. The screw diameter is 55 mm; length/diameter ratio is 30:1; the extrusion screw speed is 30 r/min, and the melt temperature is 145°C. The blow-up ratio is 3.5. Film specification: a width of 550 mm and a thickness of 50 μm.

Shear and peel strength:

50 μm of the above film blowing sample was used, and tested by reference to GB 10457-2009 Plastic cling wrap film for keeping fresh of food 7.8 Self-cling (shear and peel strength). According to the practical use, the sample should meet the requirement, i.e., the shear and peel strength of the plastic cling wrap film for keeping fresh of food is not less than 0.5N/$cm^2$ as defined in GB10457-2009.

Overall migration of the polyether ester:

50 μm of the above film blowing sample was used and cut into a 10 cm*10 cm sheet film. The overall migration of the polyether ester was determined by reference to 5.2 Overall Migration Test Conditions of GB 31604.1-2015 China's National Food Safety Standard-General Rules for Migration Test of Food Contact Materials and Articles. The migration test conditions were selected as the following: 100°C, 2 h. The food simulant is 200 ml of aqueous ethanol in a volume fraction of 10%, and then the sheet film was subjected to the overall migration test.

The soaking solution after finishing the migration test was placed into a 50 mL of glass evaporating dish which was dried to a constant weight in a 100°C drying oven in advance for several times, and evaporated until there was no obvious liquid in the soak solution, and then placed into a 100°C drying oven and dried for 2 h, and then cooled in a dryer for 0.5 h, and then weighed. The weight increment of the glass evaporating dish is denoted as b mg; since the sheet film has two surfaces, its total surface area is 2 $dm^2$, and the overall migration is 0.5b mg/$dm^2$. 2 parallel tests were performed each time, and an average value was taken. Based on the practical use, the overall migration should meet the requirement, i.e., the overall migration should be not greater than 10 mg/$dm^2$ as defined in GB4806.7-2016 China's National Food Safety Standard on Plastic Materials and Articles for Food Contact Use.

## Example 1

S1: 437 kg/h of terephthalic acid, 437 kg/h of adipic acid, 690 kg/h 1,4-butanediol, 4.1 kg/h poly(1,4-butanediol) (BASF, molecular weight: 2000 g/mol), 1.15 kg/h glycerol, and 0.506 kg/h of tetrabutyl orthotitanate were physically mixed in an esterification reactor at room temperature, and then the mixture was subjected to esterification reaction for 60-120 min at 240°C and 0.45 bar, to obtain an esterification product AB;

S2: the esterification product AB entered a vertical-stirred full-mixed reactor after going through a static mixer and heated up to 260°C; at the beginning, the pressure was 0.3 bar; 0.276 kg/h of tetrabutyl orthotitanate were added to the reactor for reacting for 60-120 min; when the pressure reduced to 100 mbar, most of the excessive 1,4-butanediol were distilled off. At this time, the reaction product achieves a viscosity number 24 ml/g as determined in a phenol/o-dichlorobenzene solution having a weight ratio of 1:1 in a 25±0.05°C thermostatic water bath as defined in GB/T 17931-1999;

S3: 0.23 kg/h of phosphorous acid were added to the reaction mixture, meanwhile, the reaction mixture was transferred to a final polycondensation kettle for further polycondensation for 80-100 min at 260°C and a pressure of 1 mbar; the remaining excessive 1,4-butanediol and other by-products were distilled off; afterwards, the obtained product was granulated by an underwater granulator and dried to obtain the final product semi-aromatic polyether ester. The performance results are shown in Table 1.

Example 2

S1: 437 kg/h of terephthalic acid, 437 kg/h of adipic acid, 690 kg/h 1,4-butanediol, 10.8 kg/h poly(1,4-butanediol) (BASF, molecular weight: 2000 g/mol), 1.15 kg/h glycerol, and 0.506 kg/h of tetrabutyl orthotitanate were physically mixed in a first esterification reactor at room temperature, and then the mixture was subjected to esterification reaction for 60-120 min at 240°C and 0.45 bar, to obtain an esterification product AB;
S2: the esterification product AB entered a vertical-stirred full-mixed reactor after going through a static mixer and heated up to 260°C; at the beginning, the pressure was 0.3 bar; 0.276 kg/h of tetrabutyl orthotitanate were added to the reactor for reacting for 60-120 min; when the pressure reduced to 100 mbar, most of the excessive 1,4-butanediol were distilled off. At this time, the reaction product achieves a viscosity number 27 ml/g as determined in a phenol/o-dichlorobenzene solution having a weight ratio of 1:1 in a 25±0.05°C thermostatic water bath as defined in GB/T 17931-1999;
S3: 0.23 kg/h of phosphorous acid were added to the reaction mixture, meanwhile, the reaction mixture was transferred to a final polycondensation kettle for further polycondensation for 80-100 min at 260°C and a pressure of 1 mbar; the remaining excessive 1,4-butanediol and other by-products were distilled off; afterwards, the obtained product was granulated by an underwater granulator and dried to obtain the final product semi-aromatic polyether ester. The performance results are shown in Table 1.

Example 3

S1: 437 kg/h of terephthalic acid, 437 kg/h of adipic acid, 690 kg/h 1,4-butanediol, 17.5 kg/h poly(1,4-butanediol) (BASF, molecular weight: 2000 g/mol), 1.15 kg/h glycerol, and 0.506 kg/h of tetrabutyl orthotitanate were physically mixed in the esterification reactor at room temperature, and then the mixture was subjected to esterification reaction for 60-120 min at 240°C and 0.45 bar, to obtain an esterification product AB;
S2: the esterification product AB entered a vertical-stirred full-mixed reactor after going through a static mixer and heated up to 260°C; at the beginning, the pressure was 0.3 bar; 0.276 kg/h of tetrabutyl orthotitanate were added to the reactor for reacting for 60-120 min; when the pressure reduced to 100 mbar, most of the excessive 1,4-butanediol were distilled off. At this time, the reaction product achieves a viscosity number 26 ml/g as determined in a phenol/o-dichlorobenzene solution having a weight ratio of 1:1 in a 25±0.05°C thermostatic water bath as defined in GB/T 17931-1999;
S3: 0.23 kg/h of phosphorous acid were added to the reaction mixture, meanwhile, the reaction mixture was transferred to a final polycondensation kettle for further polycondensation for 80-100 min at 260°C and a pressure of 1 mbar; the remaining excessive 1,4-butanediol and other by-products were distilled off. The obtained product was then granulated with an underwater granulator, and dried to obtain the final product semi-aromatic polyether ester. The performance results are shown in Table 1.

Example 4

S1: 437 kg/h of terephthalic acid, 437 kg/h of adipic acid, 690 kg/h 1,4-butanediol, 10.9 kg/h poly(1,4-butanediol) (BASF, molecular weight: 1000 g/mol), 1.15 kg/h glycerol, and 0.506 kg/h of tetrabutyl orthotitanate were physically mixed in the esterification reactor at room temperature, and then the mixture was subjected to esterification reaction for 60-120 min at 240°C and 0.45 bar, to obtain an esterification product AB;
S2: the esterification product AB entered a vertical-stirred full-mixed reactor after going through a static mixer and heated up to 260°C; at the beginning, the pressure was 0.3 bar; 0.276 kg/h of tetrabutyl orthotitanate were added to the reactor for reacting for 60-120 min; when the pressure reduced to 100 mbar, most of the excessive 1,4-butanediol were distilled off. At this time, the reaction product achieves a viscosity number 29 ml/g as determined

in a phenol/o-dichlorobenzene solution having a weight ratio of 1:1 in a 25±0.05°C thermostatic water bath as defined in GB/T 17931-1999;

S3: 0.23 kg/h of phosphorous acid were added to the reaction mixture, meanwhile, the reaction mixture was transferred to a final polycondensation kettle for further polycondensation for 80-100 min at 260°C and a pressure of 1 mbar; the remaining excessive 1,4-butanediol and other by-products were distilled off; afterwards, the obtained product was granulated by an underwater granulator and dried to obtain the final product semi-aromatic polyether ester. The performance results are shown in Table 1.

Example 5

Dimer(1,4-butanediol), $HO-CH_2CH_2CH_2CH_2-O-CH_2CH_2CH_2CH_2-OH$, was synthesized by referring to the reference (Alexander, K.; Schniepp, L. E., 4,4'-Dichlorodibutyl Ether and its Derivatives from Tetrahydrofuran. J. Am. Chem. Soc. 1948, 70(5): 1839-1842.).

Under the protection of high-purity nitrogen, 2.36 kg of terephthalic acid, 2.36 kg of adipic acid, 4.38 kg of 1,4-butanediol, 65 g of dimer(1,4-butanediol), 6.2 g of glycerol, and 4.2 g of titanium tetrabutoxide were put into a reaction kettle, heated up to 220-240°C and kept for 120 min. 1.25 g of phosphorous acid were put into the reaction kettle. The pressure in the reaction kettle was reduced to 50 Pa below within 30-60 min, and then the above materials were subjected to reaction for 60-120 min at 220-260°C. High-purity nitrogen was introduced into the reaction kettle after stopping stirring, and the resin was squeezed out of the reaction kettle, and water-granulated to obtain the product semi-aromatic polyether ester. The performance results are shown in Table 1.

Example 6

S1: 437 kg/h of terephthalic acid, 605 kg/h of decanedioic acid, 690 kg/h 1,4-butanediol, 10.8 kg/h poly(1,4-butanediol) (BASF, molecular weight: 2000 g/mol), 1.15 kg/h glycerol, and 0.506 kg/h of tetrabutyl orthotitanate were physically mixed in the esterification reactor at room temperature, and then the mixture was subjected to esterification reaction for 60-120 min at 240°C and 0.45 bar, to obtain an esterification product AB;

S2: the esterification product AB entered a vertical-stirred full-mixed reactor after going through a static mixer and heated up to 260°C; at the beginning, the pressure was 0.3 bar; 0.276 kg/h of tetrabutyl orthotitanate were added to the reactor for reacting for 60-120 min; when the pressure reduced to 100 mbar, most of the excessive 1,4-butanediol were distilled off. At this time, the reaction product achieves a viscosity number 27 ml/g as determined in a phenol/o-dichlorobenzene solution having a weight ratio of 1:1 in a 25±0.05°C thermostatic water bath as defined in GB/T 17931-1999;

S3: 0.23 kg/h of phosphorous acid were added to the reaction mixture, meanwhile, the reaction mixture was transferred to a final polycondensation kettle for further polycondensation for 80-100 min at 260°C and a pressure of 1 mbar; the remaining excessive 1,4-butanediol and other by-products were distilled off; afterwards, the obtained product was granulated by an underwater granulator and dried to obtain the final product semi-aromatic polyether ester. The performance results are shown in Table 1.

Example 7

S1: 437 kg/h of terephthalic acid, 437 kg/h of adipic acid, 690 kg/h 1,4-butanediol, 10.8 kg/h poly(1,4-butanediol) (BASF, molecular weight: 2000 g/mol), and 0.506 kg/h of tetrabutyl orthotitanate were physically mixed in the esterification reactor at room temperature, and then the mixture was subjected to esterification reaction for 60-120 min at 240°C and 0.45 bar, to obtain an esterification product AB;

S2: the esterification product AB entered a vertical-stirred full-mixed reactor after going through a static mixer and heated up to 260°C; at the beginning, the pressure was 0.3 bar; 0.276 kg/h of tetrabutyl orthotitanate were added to the reactor for reacting for 60-120 min; when the pressure reduced to 100 mbar, most of the excessive 1,4-butanediol were distilled off. At this time, the reaction product achieves a viscosity number 30 ml/g as determined in a phenol/o-dichlorobenzene solution having a weight ratio of 1:1 in a 25±0.05°C thermostatic water bath as defined in GB/T 17931-1999;

S3: 0.23 kg/h of phosphorous acid were added to the reaction mixture, meanwhile, the reaction mixture was transferred to a final polycondensation kettle for further polycondensation for 80-100 min at 260°C and a pressure of 1 mbar; the remaining excessive 1,4-butanediol and other by-products were distilled off; afterwards, the obtained

product was granulated by an underwater granulator and dried to obtain the final product semi-aromatic polyether ester. The performance results are shown in Table 1.

Example 8

S1: 437 kg/h of terephthalic acid, 325 kg/h of adipic acid, 595 kg/h 1,4-butanediol, 9.32 kg/h poly(1,4-butanediol) (BASF, molecular weight: 2000 g/mol), 0.994 kg/h of glycerol, and 0.446 kg/h of tetrabutyl orthotitanate were physically mixed in the esterification reactor at room temperature, and then the mixture was subjected to esterification reaction for 60-120 min at 240°C and 0.45 bar, to obtain an esterification product AB;
S2: the esterification product AB entered a vertical-stirred full-mixed reactor after going through a static mixer and heated up to 260°C; at the beginning, the pressure was 0.3 bar; 0.243 kg/h of tetrabutyl orthotitanate were added to the reactor for reacting for 60-120 min; when the pressure reduced to 100 mbar, most of the excessive 1,4-butanediol were distilled off. At this time, the reaction product achieves a viscosity number 24 ml/g as determined in a phenol/o-dichlorobenzene solution having a weight ratio of 1:1 in a 25±0.05°C thermostatic water bath as defined in GB/T 17931-1999;
S3: 0.20 kg/h of phosphorous acid were added to the reaction mixture, meanwhile, the reaction mixture was transferred to a final polycondensation kettle for further polycondensation for 80-100 min at 260°C and a pressure of 1 mbar; the remaining excessive 1,4-butanediol and other by-products were distilled off; afterwards, the obtained product was granulated by an underwater granulator and dried to obtain the final product semi-aromatic polyether ester. The performance results are shown in Table 1.

Comparative Example 1

S1: 437 kg/h of terephthalic acid, 437 kg/h of adipic acid, 690 kg/h of 1,4-butanediol, 1.15 kg/h glycerol, and 0.506 kg/h of tetrabutyl orthotitanate were physically mixed in the esterification reactor at room temperature, and then the mixture was subjected to esterification reaction for 60-120 min at 240°C and 0.45 bar, to obtain an esterification product AB;
S2: the esterification product AB entered a vertical-stirred full-mixed reactor after going through a static mixer and heated up to 260°C; at the beginning, the pressure was 0.3 bar; 0.276 kg/h of tetrabutyl orthotitanate were added to the reactor for reacting for 60-120 min; when the pressure reduced to 100 mbar, most of the excessive 1,4-butanediol were distilled off. At this time, the reaction product achieves a viscosity number 26 ml/g as determined in a phenol/o-dichlorobenzene solution having a weight ratio of 1:1 in a 25±0.05°C thermostatic water bath as defined in GB/T 17931-1999;
S3: 0.23 kg/h of phosphorous acid were added to the reaction mixture, meanwhile, the reaction mixture was transferred to a final polycondensation kettle for further polycondensation for 80-100 min at 260°C and a pressure of 1 mbar; the remaining excessive 1,4-butanediol and other by-products were distilled off; afterwards, the obtained product was granulated by an underwater granulator and dried to obtain the final product polyether ester. The performance results are shown in Table 1.

Comparative Example 2

S1: 437 kg/h of terephthalic acid, 437 kg/h of adipic acid, 690 kg/h of 1,4-butanediol, 24 kg/h of poly(1,4-butanediol) (BASF, molecular weight: 2000 g/mol), 1.15 kg/h glycerol, and 0.506 kg/h of tetrabutyl orthotitanate were physically mixed in the esterification reactor at room temperature, and then the mixture was subjected to esterification reaction for 60-120 min at 240°C and 0.45 bar, to obtain an esterification product AB;
S2: the esterification product AB entered a vertical-stirred full-mixed reactor after going through a static mixer and heated up to 260°C; at the beginning, the pressure was 0.3 bar; 0.276 kg/h of tetrabutyl orthotitanate were added to the reactor for reacting for 60-120 min; when the pressure reduced to 100 mbar, most of the excessive 1,4-butanediol were distilled off. At this time, the reaction product achieves a viscosity number 24 ml/g as determined in a phenol/o-dichlorobenzene solution having a weight ratio of 1:1 in a 25±0.05°C thermostatic water bath as defined in GB/T 17931-1999;
S3: 0.23 kg/h of phosphorous acid were added to the reaction mixture, meanwhile, the reaction mixture was transferred to a final polycondensation kettle for further polycondensation for 80-100 min at 260°C and a pressure of 1 mbar; the remaining excessive 1,4-butanediol and other by-products were distilled off; afterwards, the obtained product was granulated by an underwater granulator and dried to obtain the final product polyether ester. The performance results are shown in Table 1.

Comparative Example 3

S1: 437 kg/h of terephthalic acid, 165 kg/h of adipic acid, 460 kg/h of 1,4-butanediol, 7.22 kg/h of poly(1,4-butanediol) (BASF, molecular weight: 2000 g/mol), 0.77 kg/h of glycerol, and 0.337 kg/h of tetrabutyl orthotitanate were physically mixed in the esterification reactor at room temperature, and then the mixture was subjected to esterification reaction for 60-120 min at 240°C and 0.45 bar, to obtain an esterification product AB;
S2: the esterification product AB entered a vertical-stirred full-mixed reactor after going through a static mixer and heated up to 260°C; at the beginning, the pressure was 0.3 bar; 0.184 kg/h of tetrabutyl orthotitanate were added to the reactor for reacting for 60-120 min; when the pressure reduced to 100 mbar, most of the excessive 1,4-butanediol were distilled off. At this time, the reaction product achieves a viscosity number 26 ml/g as determined in a phenol/o-dichlorobenzene solution having a weight ratio of 1:1 in a 25±0.05°C thermostatic water bath as defined in GB/T 17931-1999;
S3: 0.153 kg/h of phosphorous acid were added to the reaction mixture, meanwhile, the reaction mixture was transferred to a final polycondensation kettle for further polycondensation for 80-100 min at 260°C and a pressure of 1 mbar; the remaining excessive 1,4-butanediol and other by-products were distilled off; afterwards, the obtained product was granulated by an underwater granulator and dried to obtain the final product polyether ester. The performance results are shown in Table 1.

Comparative Example 4

S1: 437 kg/h of terephthalic acid, 897 kg/h of adipic acid, 1077 kg/h of 1,4-butanediol, 16.85 kg/h of poly(1,4-butanediol) (BASF, molecular weight: 2000 g/mol), 1.791 kg/h of glycerol, and 0.796 kg/h of tetrabutyl orthotitanate were physically mixed in the esterification reactor at room temperature, and then the mixture was subjected to esterification reaction for 60-120 min at 240°C and 0.45 bar, to obtain an esterification product AB;
S2: the esterification product AB entered a vertical-stirred full-mixed reactor after going through a static mixer and heated up to 260°C; at the beginning, the pressure was 0.3 bar; 0.434 kg/h of tetrabutyl orthotitanate were added to the reactor for reacting for 60-120 min; when the pressure reduced to 100 mbar, most of the excessive 1,4-butanediol were distilled off. At this time, the reaction product achieves a viscosity number 25 ml/g as determined in a phenol/o-dichlorobenzene solution having a weight ratio of 1:1 in a 25±0.05°C thermostatic water bath as defined in GB/T 17931-1999;
S3: 0.36 kg/h of phosphorous acid were added to the reaction mixture, meanwhile, the reaction mixture was transferred to a final polycondensation kettle for further polycondensation for 80-100 min at 260°C and a pressure of 1 mbar; the remaining excessive 1,4-butanediol and other by-products were distilled off; afterwards, the obtained product was granulated by an underwater granulator and dried to obtain the final product polyether ester. The performance results are shown in Table 1.

Table 1 Performance test results of the Examples 2-8 and Comaparative Examples 1-4

| | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|
| Glycerol | Present | Present | Present | Present | Present | Present | Absent | Present | Present | Present | Present | Present |
| Molecular weight of raw material poly (1,4-butanediol) | 2000 | 2000 | 2000 | 1000 | 162 | 2000 | 2000 | 2000 | | 2000 | 2000 | 2000 |
| Terephthalic acid mol% | 46.5 | 46.8 | 46.7 | 46.9 | 46.6 | 46.6 | 46.9 | 54.5 | 46.8 | 46.9 | 70.5 | 30.3 |
| Adipic acid/mol% | 53.5 | 53.2 | 53.3 | 53.1 | 53.4 | | 53.1 | 45.5 | 53.2 | 53.1 | 29.5 | 69.7 |
| Decanedioic acid mol% | | | | | | 53.4 | | | | | | |
| $X_C$/mol% | 1.62 | 3.22 | 5.28 | 3.26 | 3.25 | 3.27 | 3.21 | 3.22 | 0.61 | 6.44 | 3.27 | 3.29 |
| Carboxyl group/ mmol/kg | 21 | 17 | 18 | 21 | 19 | 17 | 20 | 21 | 17 | 21 | 22 | 18 |
| Viscosity number/ml/g | 197 | 201 | 202 | 200 | 199 | 203 | 186 | 198 | 200 | 203 | 200 | 197 |
| 30-day weight retention rate/% | 56 | 54 | 50 | 55 | 53 | 50 | 51 | 63 | 58 | 43 | 82 | 32 |
| Shear and peel strength/N/$cm^2$ | 0.58 | 0.62 | 0.71 | 0.63 | 0.63 | 0.60 | 0.61 | 0.61 | 0.35 | 0.78 | 0.61 | 0.63 |

Even through no poly(1,4-butanediol) was added to Comparative Example 1, 0.61 mol% of dimer(1,4-butanediol) repeating unit was found in the obtained product due to the existence of side reaction. Due to its low content, its influence on the shear and peel strength is limited; therefore, the shear and peel strength is lower than the requirement, i.e., the shear and peel strength of the plastic cling wrap film for keeping fresh of food is not less than 0.5N/$cm^2$ as defined in GB10457-2009.

As can be seen from Examples 1-5 and Comparative Examples 1-2, based on the total molar weight of the first component A, the molar content of the repeating unit $-CH_2CH_2CH_2CH_2-O-$ in the third component C is 1.5-5.5 mol%; the shear and peel strength meets the requirement, i.e., the shear and peel strength of the plastic cling wrap film for keeping fresh of food is not less than 0.5N/$cm^2$ as defined in GB10457-2009; and the product has suitable degradation property. In Example 6, when decanedioic acid serves as the aliphatic dicarboxylic acid, the degradation rate is accelerated to some extent (the 30-day weight retention rate declines). In Example 7, there is no glycerol such that the viscosity number and 30-day weight retention rate all decrease to some extent. In Example 8, the content of terephthalic acid is slightly higher and the 30-day weight retention rate increases to some extent.

In Comparative Example 3, the content of terephthalic acid is too high and the resin degradation property is poor; and in Comparative Example 4, the content of terephthalic acid is too low and the resin is degraded too fast.

<u>Example 9</u>

The semi-aromatic polyether ester of Example 2 was subjected to film blowing and its overall migration was tested, being 2.5 mg/$dm^2$.

<u>Comparative Example 5</u>

90 parts of the semi-aromatic polyether ester of Comparative Example 1, 10 parts of C5 petroleum resin, 0.1 parts of antioxidant 1010 and 0.2 parts of antioxidant 168 were added to a high-speed mixer, stirred and mixed well, and then transferred to a twin-screw extruder for melt extrusion pelletizing to obtain a self-adhesive modified material; the screw temperature was 180-210°C and the screw speed was 350 rpm during the extrusion pelletizing of the self-adhesive modified material.

The self-adhesive modified material was subjected to film blowing; its shear and peel strength was tested 0.59 N/$cm^2$; the overall migration was 16 mg/$dm^2$.

In Comparative Example 5, the self-adhesive property is improved by a conventional mode of adding a tackifying resin; even though the shear and peel strength is higher, the overall migration exceeds the requirement, i.e., the overall migration should be not greater than 10 mg/$dm^2$ as defined in GB4806.7-2016 China's National Food Safety Standard on Plastic Materials and Articles for Food Contact Use. In Example 9, since the semi-aromatic polyether ester copolymerized by poly(1,4-butanediol) is used, the overall migration is very low and thus, the product meets the food contact requirement.

## Claims

**1.** A semi-aromatic polyether ester, comprising repeating units derived from the following components:

a first component A, based on a total molar weight of the first component A, comprising:

a1) 35-65 mol%, and preferably, 40-60 mol% of at least one aliphatic dicarboxylic acid or an ester derivative thereof or an anhydride derivative thereof,
a2) 35-65 mol%, and preferably, 40-60 mol% of at least one aromatic dicarboxylic acid or an ester derivative thereof or an anhydride derivative thereof,

a second component B: 1,4-butanediol; and
a third component C: poly(1,4-butanediol) having a molecular formula of $HO-(CH_2CH_2CH_2CH_2-O)_n-H$, wherein n is an integer from 2 to 200, and based on a total molar weight of the first component A, a molar content of a repeating unit $-CH_2CH_2CH_2CH_2-O-$ in the third component C is 1.5-5.5 mol%.

**2.** The semi-aromatic polyether ester according to claim 1, wherein the component a1) is selected from one or more of oxalic acid, dimethyl oxalate, malonic acid, dimethyl malonate, succinic acid, dimethyl succinate, methylsuccinic acid, glutaric acid, dimethyl glutarate, bis(2-hydroxyethyl) glutarate, bis(3-hydroxypropyl)glutarate, bis(4-hydroxybutyl) glutarate, 2-methylglutaric acid, 3-methylglutaric acid, adipic acid, dimethyl adipate, bis(2-hydroxyethyl) adipate, bis(3-hydroxypropyl) adipate, bis(4-hydroxybutyl) adipate, 3-methyladipic acid, 2,2,5,5-tetramethyladipic acid, pimelic acid, suberic acid, azelaic acid, dimethyl azelate, decanedioic acid, 1,11-undecanedicarboxylic acid, 1,10-decanedicarboxylic acid, undecandioic acid, 1,12-dodecanedicarboxylic acid, hexadecanedioic acid, eicosandioic acid, tetracosandioic acid, dimer acid, and an ester derivative thereof and an anhydride derivative thereof; preferably, selected from one or more of succinic acid, adipic acid, decanedioic acid, 1,12-dodecanedicarboxylic acid, and an ester derivative thereof and an anhydride derivative thereof; more preferably, selected from one or two of adipic acid, decanedioic acid, and an ester derivative thereof and an anhydride derivative thereof; and most preferably, being adipic acid, or an ester derivative thereof or an anhydride derivative thereof.

**3.** The semi-aromatic polyether ester according to claim 1 or 2, wherein the component a2) is selected from one or more of terephthalic acid, dimethyl terephthalate, bis(2-hydroxyethyl) terephthalate, bis(3-hydroxypropyl) terephthalate, bis(4-hydroxybutyl) terephthalate, isophthalic acid, dimethyl isophthalate, bis(2-hydroxyethyl) isophthalate, bis(3-hydroxypropyl) isophthalate, bis(4-hydroxybutyl) isophthalate, 2,6-naphthalenedicarboxylic acid, dimethyl 2,6-benzenedicarboxylate, 2,7-naphthalenedicarboxylic acid, dimethyl 2,7-benzenedicarboxylate, 3,4'-diphenylether dicarboxylic acid, dimethyl 3,4'-diphenylether dicarboxylate, 4,4'-diphenylether dicarboxylic acid, dimethyl 4,4'-diphenylether dicarboxylate, 3,4'-phenylthioether dicarboxylic acid, dimethyl 3,4'-phenylthioether dicarboxylate, 4,4'-phenylthioether dicarboxylic acid, dimethyl 4,4'-phenylthioether dicarboxylate, 3,4'-diphenylsulfone dicarboxylic acid, dimethyl 3,4'-diphenylsulfone dicarboxylate, 4,4'-diphenylsulfone dicarboxylic acid, dimethyl 4,4'-diphenylsulfone dicarboxylate, 3,4'-benzophenone dicarboxylic acid, dimethyl 3,4'-benzophenone dicarboxylate, 4,4'-benzophenone dicarboxylic acid, dimethyl 4,4'-benzophenone dicarboxylate, 1,4-naphthalenedicarboxylic acid, dimethyl 1,4-naphthalene dicarboxylate, 4,4'-methylenebis(benzoic acid), 4,4'-methylenebis(dimethyl benzoate), and an ester derivative thereof and an anhydride derivative thereof; and preferably being terephthalic acid, or an ester derivative thereof or an anhydride derivative thereof.

**4.** The semi-aromatic polyether ester according to any one of claims 1-3, wherein, n is an integer from 2 to 50, preferably from 2 to 30.

**5.** The semi-aromatic polyether ester according to any one of claims 1-4, further comprising a fourth component D, wherein the fourth component D comprises at least three functional groups, preferably, three to six functional groups, and preferably, the fourth component D is selected from one or more of tartaric acid, citric acid, malic acid, trimethylolpropane, trimethylolethane, pentaerythritol, polyether triol, glycerol, 1,3,5-benzenetricarboxylic acid, 1,2,4-benzenetricarboxylic acid, 1,2,4-benzenetricarboxylic anhydride, 1,2,4,5-benzenetetracarboxylic acid, and pyromellitic dianhydride; and preferably, the fourth component D is trimethylolpropane, pentaerythritol, or glycerol;
preferably, based on the total molar weight of the first component A, the fourth component D has a molar content of 0.01-5.0 mol%, and further preferably 0.02-2.0 mol%.

**6.** The semi-aromatic polyether ester according to any one of claims 1-5, further comprising a fifth component E, wherein the fifth component E is a chain extender, and is preferably selected from one or more of an isocyanate, an isocyanurate, a peroxide, an epoxide, oxazoline, oxazine, lactam, carbodiimide, and polycarbodiimide comprising two or more functional groups; preferably, being an isocyanate comprising two or more functional groups; and more preferably, being hexamethylene diisocyanate;
preferably, based on the total molar weight of the first component A, the fifth component E has a content of 0.01-5.0 mol%.

**7.** The semi-aromatic polyether ester according to any one of claims 1-6, wherein the semi-aromatic polyether ester has a viscosity number of 100-350 ml/g as determined in a phenol/o-dichlorobenzene solution having a weight ratio of 1:1 in a 25$\pm$0.05°C thermostatic water bath in accordance with the provision of GB/T 17931-1999;
preferably, the semi-aromatic polyether ester has a carboxyl group content of 5-60 mmol/kg, and further preferably, 10-50 mmol/kg.

**8.** A method for preparing the semi-aromatic polyether ester according to any one of claims 1-7, comprising the following steps:

step S1: mixing the first component A, the second component B, the third component C, and a portion of a catalyst (the fourth component D being also added if necessary), and then heating up to 150-280°C for esterification reaction for 1-2 h in an esterification reactor to obtain an esterification product AB;
step S2: performing primary polycondensation on the esterification product AB obtained in the step S1 under the action of the remaining catalyst at a reaction temperature of 230-270°C until a reaction product reaches a

viscosity number of 20-60 ml/g as determined in a phenol/o-dichlorobenzene solution having a weight ratio of 1:1 in a 25±0.05°C thermostatic water bath in accordance with the provision of GB/T 17931-1999; and

step S3: transferring a product obtained from the primary polycondensation in the step S2 into a final polycondensation kettle for continuous polycondensation at a temperature of 220-270°C until a reaction product reaches a viscosity number of 100-250 ml/g as determined in a phenol/o-dichlorobenzene solution having a weight ratio of 1:1 in a 25±0.05°C thermostatic water bath in accordance with the provision of GB/T 17931-1999, and the reaction product has a carboxyl group content of 5-60 mmol/kg, to obtain the semi-aromatic polyether ester;

wherein preferably, in the step S1, the second component B has a molar content of 1.1-3.0 times that of the first component A;

preferably, in the step S1, the catalyst is added in an amount of 0.001-1%, and preferably, 0.02-0.2% of a final weight of the semi-aromatic polyether ester;

preferably, in the step S1, the catalyst is added in an amount of 50-80 wt% of a total weight of the catalyst;

preferably, in the step S2, the reaction temperature is 240-260°C;

preferably, in the step S2, a pressure is 0.1-0.5 bar, and preferably, 0.2-0.4 bar at the beginning; and a pressure is 5-200 mbar, and preferably, 10-100 mbar at the end;

preferably, in the step S2, a reaction time is 1-5 h;

preferably, in the step S3, the reaction temperature of the continuous polycondensation is 230-270°C;

preferably, in the step S3, a pressure is 0.2-5 mbar, and preferably, 0.5-3 mbar at the beginning;

preferably, in the step S3, a reaction time is 30-120 min, and preferably 50-100 min;

preferably, in the step S3, the reaction product has a carboxyl group content of 10-50 mmol/kg;

preferably, the catalyst is a tin compound, an antimony compound, a cobalt compound, a lead compound, a zinc compound, an aluminium compound or a titanium compound, preferably, being a zinc compound, an aluminium compound or a titanium compound, and more preferably, being tetrabutyl orthotitanate or tetraisopropyl orthotitanate;

preferably, the step S3 further comprises a step of adding a passivator to a reaction system;

preferably, the passivator is a phosphorus compound comprising phosphoric acid, phosphorous acid, and esters thereof; and

preferably, if necessary, at the end of the step S3, the semi-aromatic polyether ester obtained in the step S3 is added to a twin-screw extruder together with the chain extender in an amount of 0.01-5.0 mol% (based on the total molar weight of the first component A) for retention for 0.5-15 min at a reaction temperature of 200-270°C to obtain a semi-aromatic polyether ester, wherein the semi-aromatic polyether has a viscosity number of 150-350 ml/g as determined in a phenol/o-dichlorobenzene solution having a weight ratio of 1:1 in a 25±0.05°C thermostatic water bath in accordance with the provision of GB/T 17931-1999.

**9.** A semi-aromatic polyether ester molding composition, comprising the following components in weight percentage:

5-95 wt% of the semi-aromatic polyether ester according to any one of claims 1-7;

5-95 wt% of an additive and/or other polymers; and

0-70 wt% of a reinforcing material and/or a filler.

**10.** Use of the semi-aromatic polyether ester according to any one of claims 1-7 in preparing a compost-degradable product, wherein the compost-degradable product is a fiber, a film, or a container.

**11.** Use of the semi-aromatic polyether ester according to any one of claims 1-7 in preparing a food wrap.

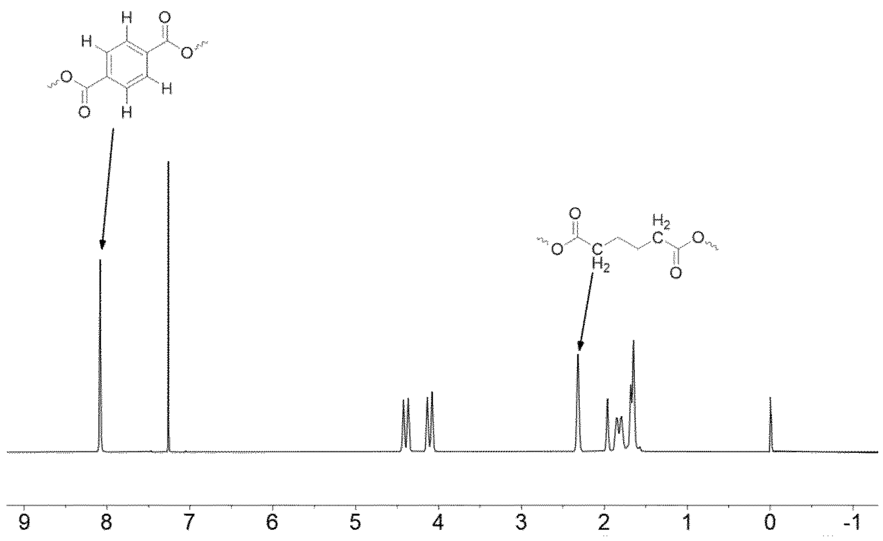
9
8
7
6
5
4
3
2
1
0
-1

FIG. 1

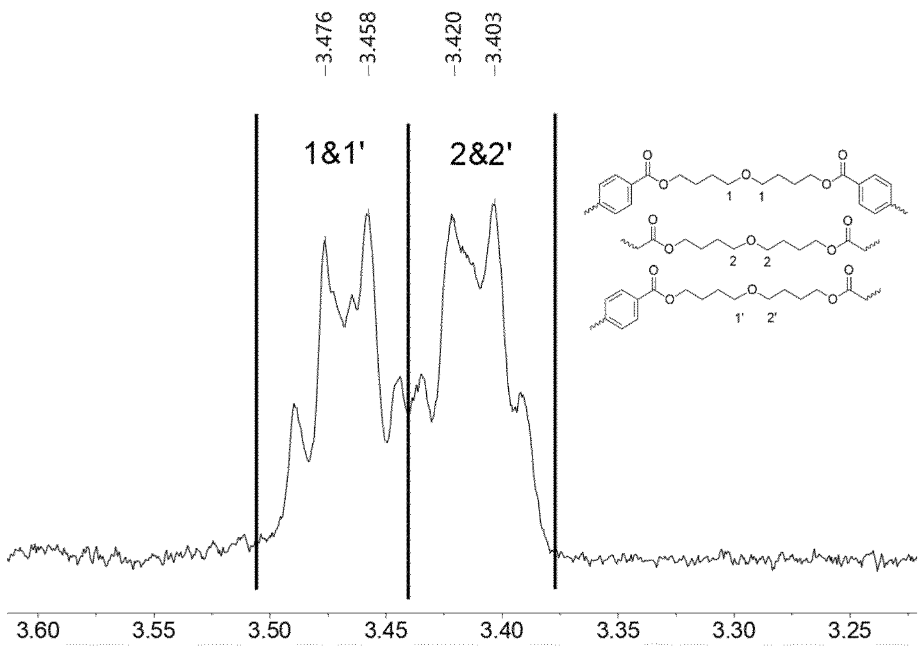
-3.476
-3.458
-3.420
-3.403
1&1'
2&2'
3.60
3.55
3.50
3.45
3.40
3.35
3.30
3.25

FIG. 2

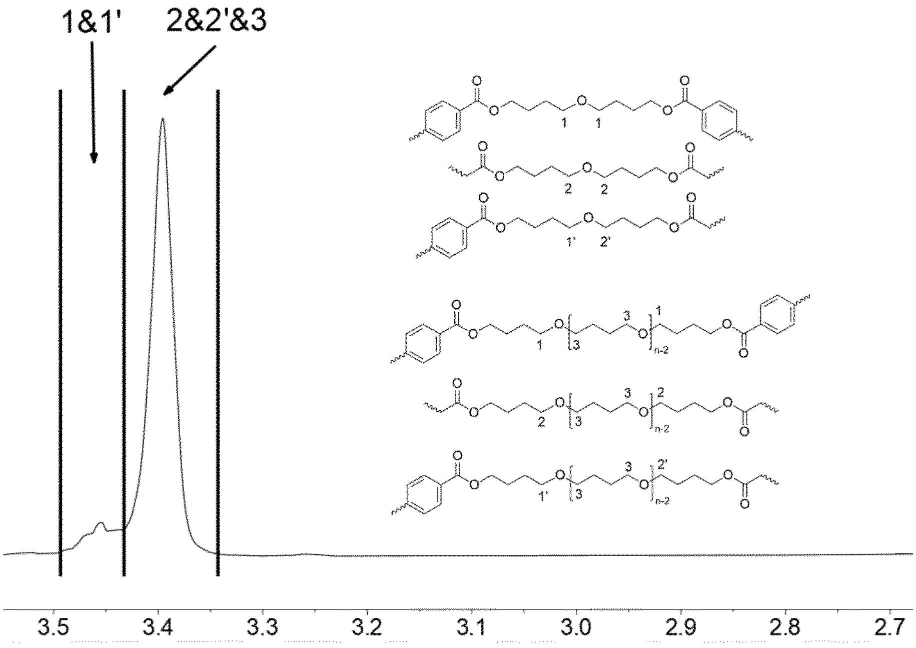


FIG. 3

**INTERNATIONAL SEARCH REPORT**

International application No. **PCT/CN2022/118114**

**A. CLASSIFICATION OF SUBJECT MATTER**

C08G 63/672(2006.01)i；C08G 63/183(2006.01)i；C08G 63/85(2006.01)i；C08L 67/02(2006.01)i

According to International Patent Classification (IPC) or to both national classification and IPC

**B. FIELDS SEARCHED**

Minimum documentation searched (classification system followed by classification symbols)

C08L; C08G

Documentation searched other than minimum documentation to the extent that such documents are included in the fields searched

Electronic data base consulted during the international search (name of data base and, where practicable, search terms used)

CNTXT WPABSC VCN CJFD NPTXT DWPI WPABS ENTXT web of science: 万通, 金发, 曾祥斌, 卢昌利, 蔡彤旻, 叶南飚, 欧阳春平, 麦开锦, 董学腾, 张传辉, 陈平绪, 保鲜膜, 二酸, 苯二甲酸, 二醇, PTMEG, 聚四亚甲基醚二醇 , 聚 5W 丁二醇, 聚四氢呋喃, 粘数, 扩链剂, PTMG, film+, Polytetramethylene ether glycol, Butanediol, Polytetrahydrofuran , Chain extender, Viscosity numbe

**C. DOCUMENTS CONSIDERED TO BE RELEVANT**

| Category* | Citation of document, with indication, where appropriate, of the relevant passages | Relevant to claim No. |
|---|---|---|
| X | CN 111978521 A (WANHUA CHEMICAL GROUP CO., LTD.) 24 November 2020 (2020-11-24)<br>description, paragraphs [0006]-[0062] and [0079]-[0082], and embodiments 2 and 3 | 1-11 |
| X | US 2013158196 A1 (TEASLEY MARK F et al.) 20 June 2013 (2013-06-20)<br>claim 1, and description, paragraphs 0007-0013 | 1-11 |
| X | CN 102558519 A (SHANGHAI LIGHT INDUSTRY RESEARCH INSTITUTE CO., LTD.) 11 July 2012 (2012-07-11)<br>description, paragraphs [0014]-[0037], and embodiment 4 | 1-11 |
| A | CN 112280026 A (JIANGSU KINGFA SCI. & TECH. ADVANCED MATERIALS CO., LTD.) 29 January 2021 (2021-01-29)<br>entire document | 1-11 |
| A | GB 1490091 A (E. I. DU PONT DE NEMOURS AND COMPANY) 26 October 1977 (1977-10-26)<br>entire document | 1-11 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **11 November 2022** | **24 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/118114**

**C. DOCUMENTS CONSIDERED TO BE RELEVANT**

| Category* | Citation of document, with indication, where appropriate, of the relevant passages | Relevant to claim No. |
|---|---|---|
| A | US 4031165 A (TEIJIN LTD.) 21 June 1977 (1977-06-21)<br>entire document | 1-11 |
| A | CN 102020772 A (INSTITUTE OF CHEMISTRY, CHINESE ACADEMY OF SCIENCES) 20 April 2011 (2011-04-20)<br>entire document | 1-11 |
| A | US 2020190257 A1 (BASF SE) 18 June 2020 (2020-06-18)<br>entire document | 1-11 |
| A | WO 2021130106 A1 (NOVAMONT SPA) 01 July 2021 (2021-07-01)<br>entire document | 1-11 |

Form PCT/ISA/210 (second sheet) (January 2015)

**INTERNATIONAL SEARCH REPORT**
**Information on patent family members**

International application No.
**PCT/CN2022/118114**

| Patent document cited in search report | | | Publication date (day/month/year) | Patent family member(s) | | | Publication date (day/month/year) |
|---|---|---|---|---|---|---|---|
| CN | 111978521 | A | 24 November 2020 | None | | | |
| US | 2013158196 | A1 | 20 June 2013 | None | | | |
| CN | 102558519 | A | 11 July 2012 | None | | | |
| CN | 112280026 | A | 29 January 2021 | CN | 112280026 | B | 29 January 2021 |
| GB | 1490091 | A | 26 October 1977 | JP | S5078650 | A | 26 June 1975 |
| | | | | DE | 2451369 | A1 | 12 June 1975 |
| US | 4031165 | A | 21 June 1977 | JPS | 51111894 | A | 02 October 1976 |
| CN | 102020772 | A | 20 April 2011 | CN | 102020772 | B | 25 July 2012 |
| US | 2020190257 | A1 | 18 June 2020 | EP | 3622000 | A1 | 18 March 2020 |
| | | | | WO | 2018206349 | A1 | 15 November 2018 |
| | | | | KR | 20190142345 | A | 26 December 2019 |
| | | | | JP | 2020519727 | A | 02 July 2020 |
| | | | | CN | 110573550 | A | 13 December 2019 |
| WO | 2021130106 | A1 | 01 July 2021 | CA | 3165622 | A1 | 01 July 2021 |
| | | | | KR | 20220125263 | A | 14 September 2022 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 106478930 A
- CN 1170419 A
- CN 112538321 A
- GB 104572009 A


### Non-patent literature cited in the description


- **CHEN, X ; CHEN, W. ; ZHU, G. ; HUANG, F. ; ZHANG, J.** Synthesis, 1H-NMR characterization, and biodegradation behavior of aliphatic-aromatic random copolyester. *J. Appl. Polym. Sci.,* 2007, vol. 104 (4), 2643-2649
- **MILES, W. H. ; RUDDY, D. A. ; TINORGAH, S. ; GEISLER, R. L.** Acylative Dimerization of Tetrahydrofuran Catalyzed by Rare-Earth Triflates. *Synth. Commun.,* 2004, vol. 34 (10), 1871-1880
- **PARK, Y. H. ; CHO, C. G.** Synthesis and characterization of poly[(butylene succinate)-co-(butylene terephthalate)J-b-poly(tetramethylene glycol) segmented block copolymer. *J. Appl. Polym. Sci.,* 2001, vol. 79 (11), 2067-2075
- **ALEXANDER, K. ; SCHNIEPP, L. E.** 4,4'-Dichlorodibutyl Ether and its Derivatives from Tetrahydrofuran. *J. Am. Chem. Soc.,* 1948, vol. 70 (5), 1839-1842